# EUROPEAN PATENT APPLICATION

(11) **EP 4 825 520 A1**
(43) Date of publication of application: **21.10.2026**
(21) Application number: 26165527.8
(22) Date of filing: 17.03.2026
(51) Int. Cl.: B23K 26/00, B23K 26/035, B23K 26/046

(54) **HANDHELD LASER WELDING SYSTEMS AND METHODS FOR OUTPUT VALIDATION**

(30) Priority: 19.03.2025 US 202563774563 P; 12.03.2026 US 202619565095
(71) Applicant: Illinois Tool Works Inc., Glenview IL 60025 (US)
(72) Inventor: TYLER, Charles Ace, Glenview, 60025 (US); LIU, Shuang, Glenview, 60025 (US); ADRIAN, Michael, Glenview, 60025 (US); POHLMAN, Kyle, Glenview, 60025 (US); BEIL, Peter, Glenview, 60025 (US)
(74) Representative: HGF

(57) **Abstract**

Systems and methods for laser welding are disclosed. A laser welding system includes a handheld laser welding torch having a nozzle, the nozzle being configured to output a laser beam from the handheld laser welding torch. The handheld laser welding torch is supported by a frame, the frame configured to fix a position and orientation of the nozzle and the handheld laser welding torch with respect to a workpiece during a welding operation. A method of operating the handheld laser welding torch is also provided, such that consistent welds are generated on a standardized workpiece.

## Description

### CLAIM OF PRIORITY

This patent application claims priority to and claims benefit from United States Provisional Patent Application Serial No. 63/774,563, filed on March 19, 2025. The above identified application is hereby incorporated herein by reference in its entirety.

### BACKGROUND

Welding is a process that has historically been a cost effective joining method. Welding is, at its core, a way of bonding two pieces of parent material. Laser welding is a welding technique used to join multiple pieces of metal through the use of a laser. The laser beam provides a concentrated heat source, enabling precise control of the heat input and high welding speed, creating a weld with low heat input, and a small heat affected zone. In various applications, filler metal may be needed for different purposes such as filling a gap between workpieces, reinforcing the joint, overlaying a substrate surface, building up an object, or acting as a buffering medium.

Conventional laser-based welding tools can employ various optics and lenses to focus laser beams to perform a weld. Lenses can be sensitive, making it challenging to perform quality welds consistently. Thus, systems and/or methods that ensures quality welding from laser based welding systems are desirable.

### SUMMARY

This disclosure relates generally to laser welding systems, methods, and apparatuses. More particularly, this disclosure relates to manual, or handheld, laser welding systems and torches, configured to perform welds by use of a fixed-position frame, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 illustrates an example laser type welding system, in accordance with aspects of this disclosure.
FIG. 2 illustrates an example hand held laser welding tool, in accordance with aspects of this disclosure.
FIG. 3 illustrates an example hand held laser welding tool mounted on a fixed-position frame, in accordance with aspects of this disclosure.
FIG. 4 illustrates example welds performed on a workpiece, in accordance with aspects of this disclosure.
FIG. 5 illustrates an example method of performing a series of consistent spot welds via a handheld laser welding tool mounted on a fixed-position frame, in accordance with aspects of this disclosure.
FIG. 6 illustrates images of example lenses in accordance with aspects of this disclosure.
FIGS. 7A through 7D illustrate example images of example welds performed with the example frame, in accordance with aspects of this disclosure.

The figures are not necessarily to scale. Wherever appropriate, similar or identical reference numerals are used to refer to similar or identical components.

### DETAILED DESCRIPTION

Disclosed example systems and methods for laser welding are provided. In particular, disclosed example laser welding systems include a manually operated laser welding torch mounted on a fixed-position frame to direct laser power to a workpiece to generate one or more welds during a laser welding operation. Weld characteristics of the one or more welds are compared against weld characteristics from a predetermined or idealized weld to determine a quality of a lens of the manually operated laser welding torch.

Conventional laser-based welding tools can employ various optics and lenses to focus laser beams to perform a weld. By its very nature, welding generates spatter which can blow back onto the welding tools. The spatter, as well as other environmental contaminants, may collect on a surface of the lens and impede transmission and/or focus of the laser beam. As the lens should be transparent to the laser beam, the spatter or other contaminants may cause the lens to heat up, block the laser beam, thereby causing redirection or shifting of the focal point and/or power distribution. As the lens(es) become contaminated and/or damaged, the light generated by the laser does not travel through the lens in the same way. The laser beam may be refracted and/or misdirected due to spatter and contaminants burning into the lens, changing the character and quality of the lens. However, it is often difficult to assess when the level of contamination is high enough to negatively impact the quality of the weld. There is currently no way to determine if the laser beam from the handheld laser welding tool is delivering the wattage indicated on the laser power supply.

A clear lens, transmitting full laser power to a weld, should result in a weld with a set of desirable weld characteristics. The weld characteristics may be measurable, including clarity, integrity, size, thermal expansion, or refractive index, one or more of which may correspond to a penetration depth and/or quality of the weld. If the weld characteristics deviate from the desirable or predetermined weld characteristics (such as by more than a threshold amount), this is evidence the lens has surface contaminants or other damage, and should be replaced.

The largest challenge then is producing a series of welds with a handheld laser welding tool that are consistent. For example, the smallest movements or variations in position can have a big impact on weld characteristics, such as penetration depth. Here, penetration depth can be measured, calculate, or other determined to identify whether a lens or other components of the laser welding system have degraded.

To assess the quality of a lens, for instance, a weld program was designed to activate the handheld laser welding torch for a predetermined amount of time (e.g., approximately 1-30 seconds), the timing being selected to allow the lens of the laser torch to heat up. Sufficient heat ensures the laser beam is refracting as it would during a welding operation. This program correlates with welding of a sacrificial welding coupon, in which the operator can perform an initial weld test to determine an amount of penetration depth. For example, if the weld yields a predetermined amount or size of burn through on the back side of the workpiece, this can indicate a suitably clear lens. A series of welds can then be performed within the confines of the same program to ensure all welds performed are consistent, thereby providing the correct amount of wattage.

Torch angle has a large impact on the results of welds and thus the weld characteristics. To ensure each weld is performed with consistent position and/or orientation with respect to the workpiece, a torch holder was designed to be used to perform each weld. The torch holder, or frame, is designed to support the handheld laser welding torch in a specific, fixed, consistent manner, such that for each similar set up (e.g., size and type of torch, nozzle, neck, workpiece, laser wattage, amount of weld time, etc.), the weld is the same. This ensures that similar welds are being compared against one another, such that changes are apparent, easily measured, and are not the result of operator error.

A desired weld and/or calibration weld can be performed, and data corresponding to the weld can be stored for later comparison (e.g., on control circuitry). For example, penetration depth of a weld is a primary indicator of a quality weld. If a test weld fails to yield a desired penetration depth (e.g., the penetration does not reach the back side of the workpiece, as it had in a calibration weld), the lack of delivered wattage indicates to the system and operator that one or more lenses may be contaminated. This may require one or more lenses (typically a cover, a protective, or sacrificial lens) to be replaced, as the torch is not providing the depth of penetration previously measured.

Advantageously, employing the validation process disclosed herein ensures that the test welds are performed in a consistent manner, such that welds can be measured and compared with other welds or test data. The comparisons can be used to validate depth of penetration of each weld, which can be used to validate a quality of the lenses within the laser welding system. Information for depth of penetration and/or lens quality can be used to generate an alert for an operator. In some examples, the information can be used to control an output, such as activation or deactivation of the laser beam.

As used herein, the word "exemplary" means serving as an example, instance, or illustration. The examples described herein are not limiting, but rather are exemplary only. It should be understood that the described examples are not necessarily to be construed as preferred or advantageous over other examples. Moreover, the term "examples" does not require that all examples of the disclosure include the discussed feature, advantage, or mode of operation.

As used herein, a wire-fed welding-type system refers to a system capable of performing welding (e.g., gas metal arc welding (GMAW), gas tungsten arc welding (GTAW), etc.), brazing, cladding, hardfacing, and/or other processes, in which a filler metal is provided by a wire that is fed to a location on the workpiece, such as an arc, a laser beam, or weld puddle.

As used herein, the term "welding-type operation" includes a welding operation employing a laser welding systems using laser energy, operable to fuse, bind, and/or cut one or more materials and/or layers of materials.

As used herein, a welding-type power source refers to any device capable of, when power is applied thereto, supplying welding, cladding, plasma cutting, induction heating, laser (including laser welding and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, laser beam scanning, laser beam scanning profile, laser scanning profile, or scanning profile, and/or wobble refers to one or more of control of the shape (e.g., common geometric shapes, a rectangle, a triangle, a loop, a circle, a zig-zag, V-shape, a U-shape, a figure-8, etc.), size (e.g., width and/or length), power distribution (e.g., bell curve, ramping up or down, favor one side over the other or center), scanning speed (e.g., over entire scan and/or over discrete portions of the scan), and/or pulse frequency (e.g., over entire scan and/or over discrete portions of the scan) of the laser power on the workpiece and/or the filler material, and any combination thereof.

For the purpose of promoting an understanding of the principles of the claimed technology and presenting its currently understood best mode of operation, reference will be made to the examples illustrated in the drawings, and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

### [CLAIMS TO BE ADDED UPON APPROVAL]

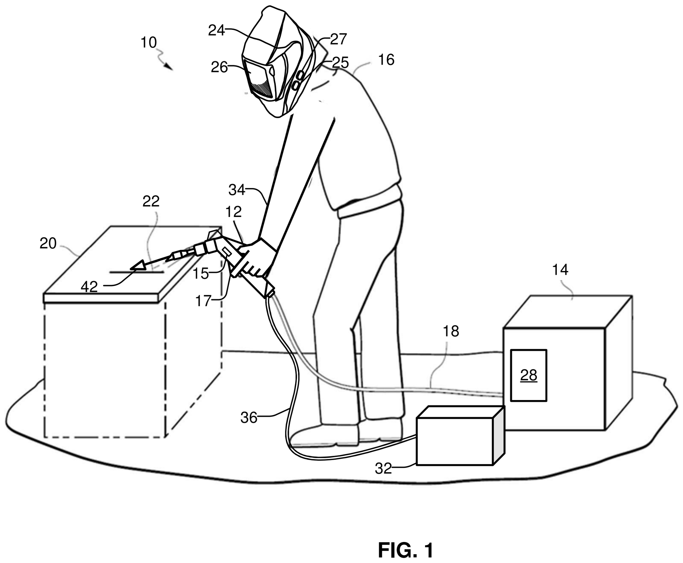

Turning to the figures, FIG. 1 provides a schematic diagram of an example laser welding system 10. The example laser welding system 10 of FIG. 1 includes a laser welding power supply 14, a laser power source 28, a laser controller 30, and a wire feeder 32. A laser welding torch 12 is connected to the power supply 14 via power cable 18, and receives wire 36 from the wire feeder 32.

The laser source 28 generates welding-type laser power 42 (e.g., directed light energy) based on input power received from the power supply 14. The laser source 28 may be a light emitting a CO2 laser, Nd:YAG laser, diode-type laser, fiber laser, disk laser or any other type of laser generator. As used herein, welding-type lasing power refers to laser power having wavelength(s) that are suitable for delivering energy to metal for welding, cutting, and/or cladding.

An operator 16 can wear one or more of a wearable 34 (such as a glove, a smartwatch, etc.) and/or a helmet 24. In some examples, the helmet 24 includes a screen 26, which may be configured to automatically dim when exposed to intense light, may be a filter for one or more wavelengths, and/or may be connected to another part of the system (e.g., controller 30). This allows the screen 26 to present information to the operator 16 to inform the welding process. In some examples, a helmet can include an auto-darkening filter (ADF). The filter may block and/or respond to specific wavelengths associated with laser welding, for instance, to darken the view screen. The filtering feature can also be applied to goggles and/or glasses.

In some examples, within the helmet, goggles, and/or glasses, a screen can be within view of the user, providing the view of a camera. This can be limited to the view from the camera, or may provide an augmented reality (AR) and/or virtual reality (VR) image. In some examples, the helmet 24 may include a sensor 27 (e.g., a heat sensor, a light sensor, an inertial measurement unit (IMU), an accelerometer, etc.) and/or a camera 25 (e.g., optical camera, infrared (IR) camera, etc.).

The torch 12 focuses the laser power 42 at a joint or weld 22 on a workpiece 20. The laser power 42 heats the workpiece 20 to generate a puddle during welding operations. The wire feeder 32 feeds the wire 36 (e.g., filler wire, cladding material, metal additive) to the puddle generated by the laser power 42. The wire 36 melts into the puddle in the weld 22. The wire 36 may be fed from a wire supply, such as a wire reel or wire supply drum, and may be conveyed through a cable or other suitable conduit.

During a welding process, the laser controller 30 controls a focal point of the laser beam to wobble in multiple axes as applied to the workpiece 20. By moving the focal point in multiple directions, the laser can induce one or more beneficial effects in the weld. Examples of such beneficial effects that can be induced in the lateral direction(s) include agitating or stirring of the puddle laterally (including in patterns) to improve filler mixing, creating a heat gradient in the puddle in at least a partially lateral direction to induce movement and improve puddle wetting, and/or controlling the heating and/or cooling rates of the puddle in at least a partially lateral direction by controlling where heat is concentrated.

In some examples, movement of the focal point of the laser beam is controlled such that side-to-side motion is variable, random, and/or has multiple changing directions, angles, and/or lengths. For instance, side-to-side movement of the focal point may promote gap filling, wetting at the toes of a workpiece, etc., and may be set to a high wobble frequency (e.g., greater than 100 wobbles/movements per second). An additional, possibly independently controlled forward-backward motion at a lower wobble frequency could be used to result in a substantially rippled appearance, similar to a traditional ripple look of tungsten inert gas (TIG) welds, and/or other desirable characteristics. As disclosed herein, wobble can be implemented on a wire as well as the laser beam to further enhance the quality and appearance of the weld bead.

In some examples, the wire feeder 32 can be fitted with one or more devices to control lateral movements of the wire 36, in addition to forward or backward movement thereof. For instance, the wire 36 may be channeled to the workpiece 20 and experience a force (e.g., from an actuator, barrier, a mechanical biasing element, etc.) which causes the wire 36 to move in a lateral pattern, circular motion, or other movement. In examples, patterned movement of the wire 36 can be controlled to sync with and/or complement the application of the laser beam 42. This can include applying a portion of the laser beam over the wire prior to the wire entering a weld bead (e.g., for preheating) and/or scanning the laser beam in a pattern, then controlling the wire to follow the pattern to enhance deposition rates and/or travel speed.

In some examples, a preheating device 15 (e.g., a resistive and/or inductive heater) is employed at or near the laser welding torch 12. Employing preheating can lower the amount of laser energy required to perform a weld, and/or increase the speed and/or amount of wire applied to a given weld. The preheating device 15 may include one or more sensors to gauge a temperature and/or enthalpy of the wire and/or workpiece. In some examples, the preheating device 15 includes and/or is operationally connected to an auxiliary switch (e.g., an arc clamp) to divert a portion of electrical current from the wire. In other words, if the laser welding system 10 senses an arc forming between the wire 42 and a surface of the torch (e.g., nozzle, neck, etc.) and/or the workpiece 20 during a laser welding operation, the auxiliary switch can close a circuit to direct current away from the wire to avoid arcing between the wire and a metallic surface.

The laser beam 42 can be controlled in any desired pattern, which may include, but is not limited to, a pattern with one or more straight lines and/or one or more curves. In some embodiments, the desired pattern may include a pause or break in the pattern, such as a time interval in which the focal point does not move. The desired pattern may include a circle, an ellipse, a zigzag, a figure 8, a transverse reciprocating line, a crescent, a triangle, a square, a rectangle, a non-linear pattern, an asymmetrical pattern, a pause, or any combination thereof. As may be appreciated, a pattern or a combination of patterns may be used and optimized for particular welds and/or welding positions. The movement of the focal point and the relative movement between the workpiece 20 and the laser welding torch 12 causes the focal point to trace a superimposed pattern over the workpiece 20. The example pattern may be traced by the laser beam 42 to agitate the puddle.

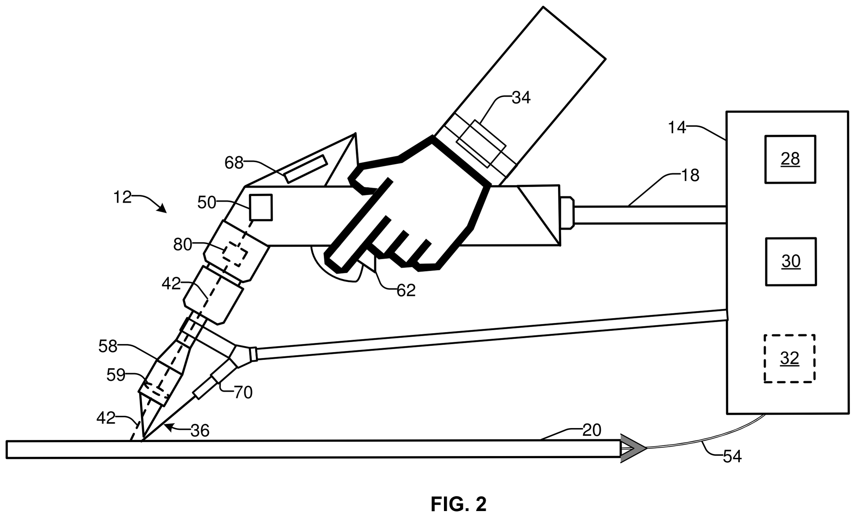

In some disclosed examples, a laser welding system may employ one or more lasers or laser beams to join multiple workpieces and/or create an object via additive manufacturing techniques. In some examples and shown in FIG. 2, a hand held laser tool 12 directs a laser beam 42 to focus on a location of the workpiece 20. This focal point may correspond to a joint to be welded, but may also result in the laser scanning in one or more patterns, such as near, over and/or about welding wire 36. In some examples, application of the laser beam is configured for cleaning a workpiece, with energy and focal spot settings selected for such an application.

In some examples shown in FIG. 2, a hand held laser tool 12 includes one or more optics or lenses 80 (e.g., a filter, a mirror, a lens, a grating, a gradient index lens, a prism, etc.) to focus, split, expand, shape and/or otherwise control application of the laser beam.

FIG. 2 shows laser beam 42 advancing from the optic 80 along an optical path through the neck and nozzle 58. In some examples, the laser beam 42 is delivered through the neck 64 (e.g., via an optical fiber and/or waveguide) and nozzle 58, and directed to a surface of the workpiece 20. As shown, the laser beam is channeled through an optic 59 (e.g., a protective lens). The optic 59 is arranged at the outlet of the nozzle 58, which may expose the optic 59 to contaminants (e.g., weld spatter, dust, debris, etc.) from the welding process and/or the environment. The contaminants may impede delivery of the laser beam, by blocking or redirecting the laser beam through the torch. As a result, the spot of the laser beam on the workpiece may be misaligned, less focused, and/or have degraded power at the surface of the workpiece. Further, the contaminants may cause the optic 59 and/or the nozzle 58 to heat up, further impacting the useful life of the optic 59 and/or the nozzle 58.

Although shown as a single laser beam impinging on a surface of the workpiece 20, in some examples the laser beam can be a plurality of laser beams applied to the workpiece, configured to converge at a common point, where the power of each beam is combined.

In some examples, the laser generator 28 creates the laser beam 42, which is introduced to the laser welding torch 12 via one or more fiber optics, and delivered to one or more optics 50 within the torch. In some examples, the welding wire, or filler material, 36 advances to the workpiece 20 via a tube or channel 70 from a wire feeder 32 (which may be a standalone accessory, or may be incorporated with the laser power supply 14). Although shown being delivered via tube 70, in some examples the wire can be fed through the center of the nozzle 58 (e.g., coaxially), such that the laser beam 42 and the welding wire 36 contact the workpiece and/or the weld bead within a small radius.

In some examples shown in FIG. 2, the hand held laser tool 12 directs one or more laser beams 42 to contact the workpiece 20. The tube or channel 70 guides welding wire 36 to the workpiece 20 from one or more angles. As shown, the tube 70 can be external to the tool 12, and can be attached, mounted, and/or integrated with the tool 12. In some examples, the tube 70 can be configured such that the wire 36 contacts the workpiece 20 in a way that assists the operator with moving the torch along at a steady and consistent travel speed.

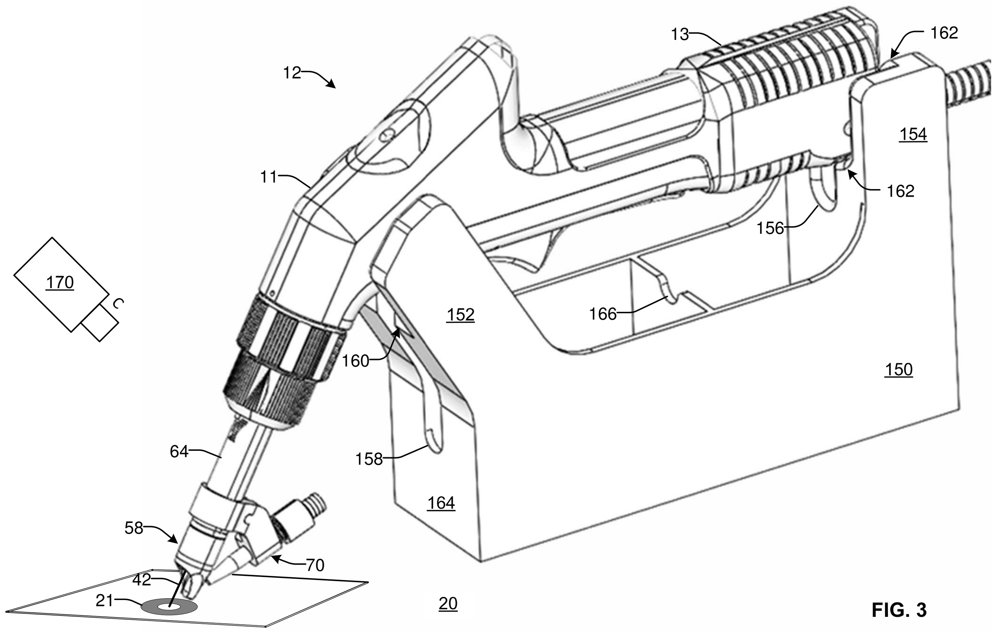

FIG. 3 illustrates a perspective view of the laser welding torch 12 mounted within a frame 150. As shown, the frame 150 is designed to support, position and orient the laser welding torch 12 in a consistent manner, such that performance of a test, or calibration, welding operation is repeatable. The frame 150 is shown as having a first support 152 and a second support 154, within which the base 11 and handle 13, respectively, of the laser welding torch 12 is mounted. The first support 152 has a groove 160, such that walls of the first support 152 extend along sides of the torch body 11, as a surface proximate the trigger makes contact with and rests within the groove 160. A notch within the second support 154 forms another groove 162 to support the handle 13. As shown, the handle 13 contacts the groove 162 at multiple points, thereby ensuring alignment along multiple axes (e.g., along the length of the torch, as well as laterally).

The frame 150 ensures that, when the torch 12 is mounted therein, the nozzle 58 has a predetermined position and/or orientation relative to the workpiece 20. Fixing the position and/or orientation of the torch/nozzle relative to the workpiece limits the number and type of variables when performing a weld. Thus, the changes in weld characteristics are not likely to be a result of movement of the angle or position of the torch, such as from operator error. Any changes to the weld characteristics are therefore a result of the system applying the laser beam. In such a system, consumable devices and/or sensitive components are often the source of changes to the weld characteristics, which may impact the quality of the weld. This can include the optic/lens 80 or the optic/cover 59. In some examples, the optics are arranged within the neck 64, nozzle 58, and/or a coupling and/or extension portion connected to the nozzle.

For example, if both the frame 150 and the workpiece 20 are placed atop a stable surface (e.g., a workbench), the angle of the nozzle 58, and therefore the laser beam 42, will be consistent each time the torch is mounted within the frame. Similarly, a distance between the nozzle 58 and the surface of the workpiece 20 will be consistent. The consistency of the position and/or orientation of the torch and nozzle ensures that each comparable to a predetermined program.

In some examples, the frame 150 has one or more adjustable members to accommodate torches 12 of different sizes/configuration, and/or workpieces. For instance, one or both of the first and second supports 152, 154 can be moved to change a distance between the first and second supports, and/or change an angle of the nozzle 58 relative to the frame 150 and/or workpiece. In some examples, the frame 150 includes an extension or base upon which one or both of the frame and/or the workpiece can be arranged. In this configuration, the position and/or orientation of the workpiece can be adjusted, and ultimately fixed, relative to the frame. The workpiece can be mounted to the extension or base by one or more trays, fasteners, and/or springs, as a list of non-limiting examples.

In examples, the frame can be formed of a magnetic material such that the frame has a magnetic attraction to a metallic work surface and/or workpiece. In some examples, the frame incorporates one or more magnets, which may optionally be removable, and/or arranged in a variable position on the frame. The frame and/or workpiece can be configured to receive a grounding fixture, clamp, or cable, and/or may be configured to be grounded to the worksurface supporting the frame.

Further, the workpiece itself should be standardized. This ensures the heat distribution across the workpiece will be consistent for each applied laser beam.

Advantageously, employing a predetermined calibration/validation program controlled by the laser power supply allows the operator to run the program without handling the torch. This removes or reduces the opportunity for operator error, further ensuring that the program is run properly and the comparison (e.g., with other welds from the torch, with a predetermined data set, etc.) is based on quality data.

In some examples, one or more notches 156, 158, 166 can be made within one or more walls of the frame 150 to receive, guide and/or support a wire and/or tube for connection with tube 70.

In some examples, one or more sensors 170 can be included to monitor the torch 12, the frame 150, and/or the workpiece 20. The sensors 170 can be arranged within the work environment (e.g., wall mounted, a wearable device, etc.), and/or mounted on the torch 12. The sensors 170 can be used to determine whether the torch is properly positioned within the frame, and/or to confirm the position and/or orientation of the nozzle relative to the workpiece. For instance, sensor data can be transmitted to the control circuitry 28, which compares the sensor data to stored data corresponding to a predetermined program for validation of the weld.

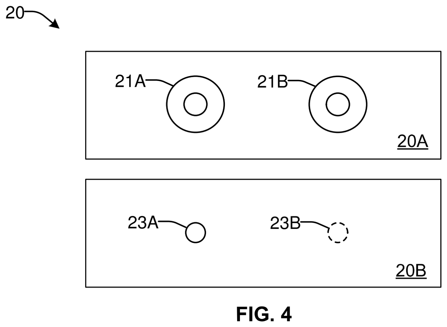

FIG. 4 illustrates a comparison of example comparison welds 21 performed on the workpiece 20. Several weld characteristics can be measured, calculated, and/or otherwise determined. The weld characteristics can include size (e.g., width, diameter, etc.), color, temperature, texture, and/or shape, as a list of non-limiting examples. The weld characteristics from a weld can be measured and compared to a previously performed weld (e.g., a calibration weld), and/or to stored data corresponding to a desired or ideal weld.

As shown, surface 20A of the workpiece faces the torch and thereby receives the majority of power/heat from the laser beam 42. The welding program applies the laser beam 42 for a predetermined amount of time (e.g., 1-30 seconds) as a spot weld (e.g., at a fixed position on the workpiece). Application of the laser beam heats the workpiece, changes from which correspond to the measurable weld characteristics, shown as an example first weld 21A and a second weld 21B. The first weld 21A may be a calibration weld, the measured weld characteristics being stored as a comparison or idealized weld. For instance, the first or calibration weld may be an initial weld of a new torch, when new lenses are installed in the torch, and/or when a new nozzle 58 or neck 64 is installed, as a listing of non-limiting examples.

Weld characteristics are selected to represent penetration depth in the workpiece 20. In some examples, the weld characteristics include an amount of discoloration and/or size of a burn through on the workpiece. As shown, the back side 20B of the workpiece 20 shows a mark 23A representing burn through on the workpiece from the first weld, and mark 23B representing burn through on the workpiece from the second weld. The representative weld characteristics may change, including size, color, temperature, texture, and/or shape, as described herein. Advantageously, burn through provides a visual indication of penetration depth, and may be scanned via sensor 170, measured, and presented to the operator accordingly.

Although some of the provided examples are directed to handheld laser welding, the systems and techniques disclosed herein may be applied to any number of laser welding systems, such as robotic welding systems and/or collaborative robot (cobot) welding systems.

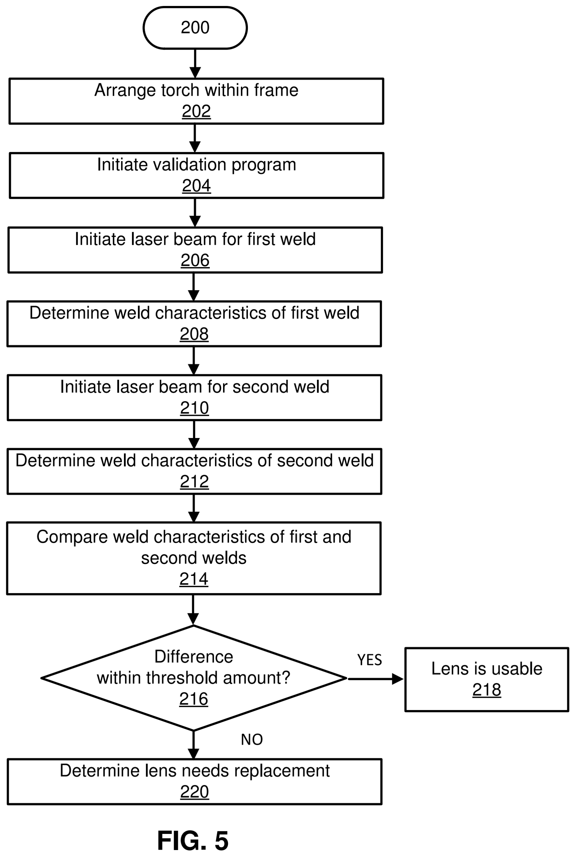

FIG. 5 provides a method 200 of verifying penetration from a handheld laser welding system. For example, the method can relate to a number of actions to physically arrange a handheld laser welding torch in a repeatable position, and proceed to perform a weld (e.g., a spot weld) to be compared to a desired (e.g., idealized or initial) weld. The actions can be preformed automatically and/or by the operator, with instructions being presented to the operator via a user interface on a laser welding power supply, for example.

In block 202, the handheld laser welding torch is arranged within a frame (e.g. a penetration verification fixture) to fix a position and orientation of handheld laser welding torch with respect to a workpiece. For the disclosed verification procedure, operators can test the output power of the laser welding torch and focal position of the laser beam on the workpiece. The procedure can be implemented on multiple workpieces, material types, and/or workpiece thicknesses (e.g., 1/8 inch, 3/16 inch, 1/4 inch). In some examples, the method or system can receive one or more inputs corresponding to the workpiece (e.g., material, thickness, etc.), and automatically determine one or more outputs, conditions, and/or arrangements for the system. This can include power output, nozzle type, wire type, position of the torch within the frame, position of the workpiece relative to the frame and/or welding torch, as a list of non-limiting examples.

The method and system are used to verify that the lens cover and focal lenses are in good working condition. In some examples, the contact tip of the torch can be in contact with the workpiece. In other examples, the contact tip can be a distance away from the workpiece, determined by the arrangement of the torch within the frame, and/or the position of the workpiece relative to the torch and/or frame.

In block 204, a welding operation is initiated via a laser welding power supply. For example, a preset validation program can be selected by an operator, which can cycle through a series of step automatically, or guide the operator through one or more steps of the program.

In block 206, a laser beam is activated via the laser welding power supply for a predetermined time (e.g., 1-30 seconds, 5-20 seconds, 8-12 seconds) to perform a first weld on the workpiece (such as an initial or calibrated weld).

In block 208, one or more weld characteristics of the first weld are determined. This can be achieved by use of a sensor, such as a camera, to measure or identify the weld characteristics.

In block 210, the laser beam is activated for the predetermined time to perform a second weld on the workpiece. Similar to the first weld, in block 212, one or more properties of the second weld are determined.

In block 214, the one or more properties of the first and second welds are compared to identify differences in the weld characteristics of each weld. For example, weld characteristics may change between welds, the laser welding power supply configured to monitor the welds and measure any changes (e.g., via the sensors 170 and/or via monitored output characteristics of the power supply). The changes can be compared against a set of data (e.g., corresponding to an idealized weld and/or previously performed calibration weld), and alert the operator that the weld output has changed beyond a threshold amount, and may require replacement of a consumable device (e.g., optic/cover 59) and/or adjustment (e.g., of the laser power, scanning pattern, etc.). Changes may additionally or alternatively be controlled by a user input (via a user interface, as disclosed herein). This allows for fine and dynamic control of the welding process.

If differences between the weld characteristics are within a threshold amount (e.g., by an absolute measurement, or a percentage), the program advances from block 216 to block 218, where the lens is considered to be within usable parameters. Laser welding can proceed normally.

If differences between the weld characteristics are greater than the threshold amount, the program advances from block 216 to block 220, where one or more lens characteristics associated with a lens of the handheld laser welding torch are determined to be outside usable standards. For instance, if the comparison of the weld characteristics results in a finding of a wide difference between measurements, the program determines that the lens is compromised and should be replaced. An alert or other instructions to that effect can be presented to the operator, such as via the user interface.

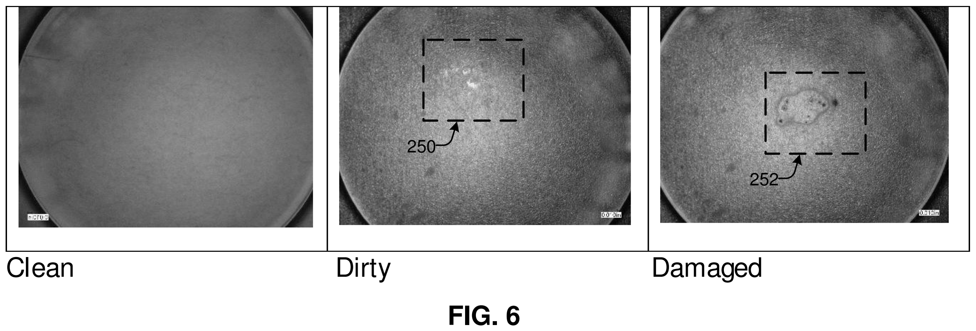

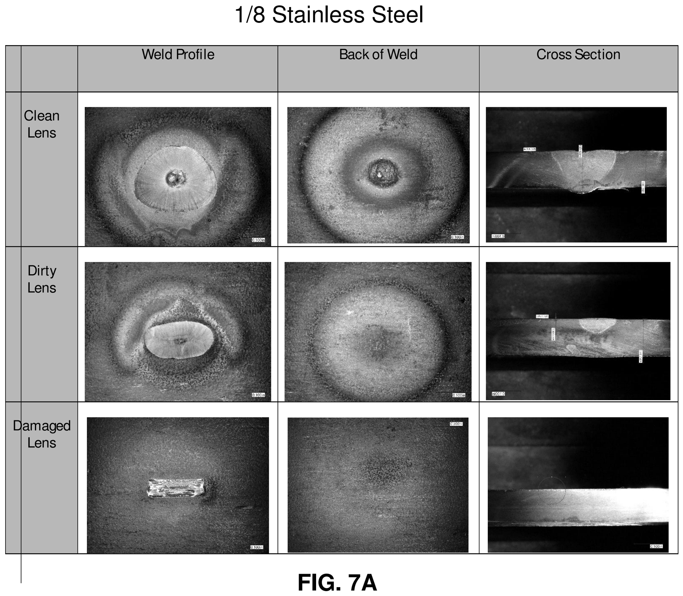

FIG. 6 illustrates images of example lenses. As shown, the lens can be characterized as clean, dirty, or damaged. A clean lens provides a desirable weld (e.g., as shown in the example images of FIGS. 7A-7D). A dirty and/or damaged weld can cause a lower power to be delivered to the workpiece, an uneven spot size/shape, and/or an undesirable power distribution, as a list of non-limiting examples. As shown, a dirty lens can have spatter and/or debris on a surface of the lens, causing a complete or partial blockage of the laser beam through the lens, as shown in block 250. A damaged lens can have scratches and/or chips, as shown in block 252, which can alter the power distribution and/or focus of the laser beam.

FIGS. 7A through 7D illustrate example images of example welds, including a weld profile (e.g., image of a first surface of the weldment), back of a weld (e.g., image of a second surface of the weldment opposite the first surface; where applicable), and cross-section (e.g., from a cut weldment) for laser welds. The example welds are performed using the disclosed frame to verify the state of the lens employed for a variety of materials.

In the illustrated examples, FIG. 7A three welds have been performed on 1/8 inch stainless steel workpiece: the first weld was performed using a clean lens, displaying a weld with acceptable characteristics; the second weld was performed with a dirty lens, displaying a first set of undesirable weld characteristics; and the third weld was performed with a damaged lens, displaying another set of undesirable weld characteristics. The analyzed characteristics can include size of the weld, color, presence and size of heat marks on the first or second surfaces. The characteristics can also include penetration depth viewed through the cross section.

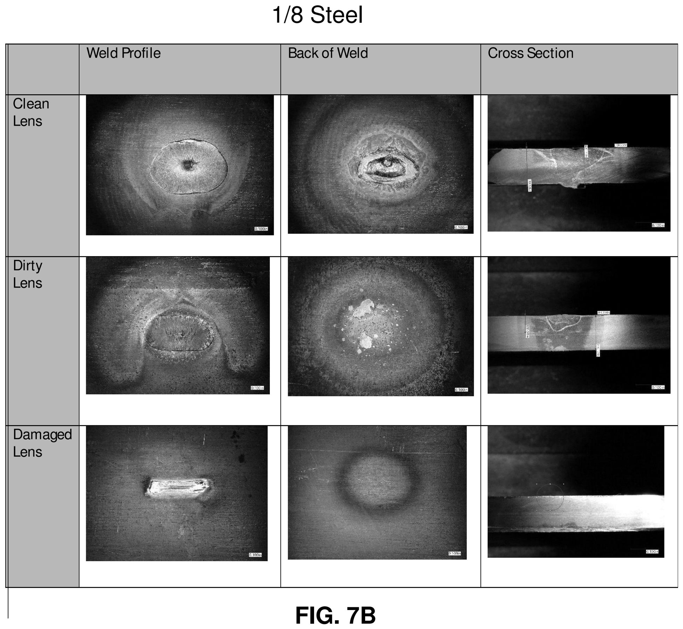

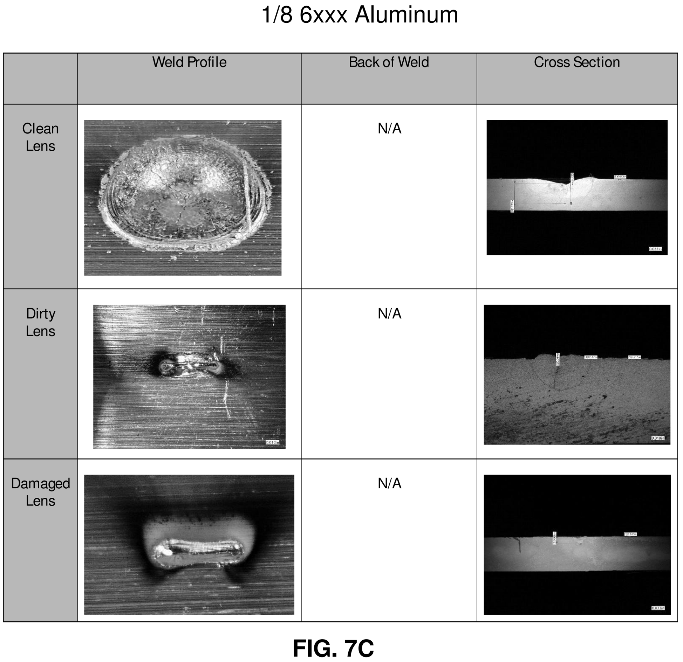

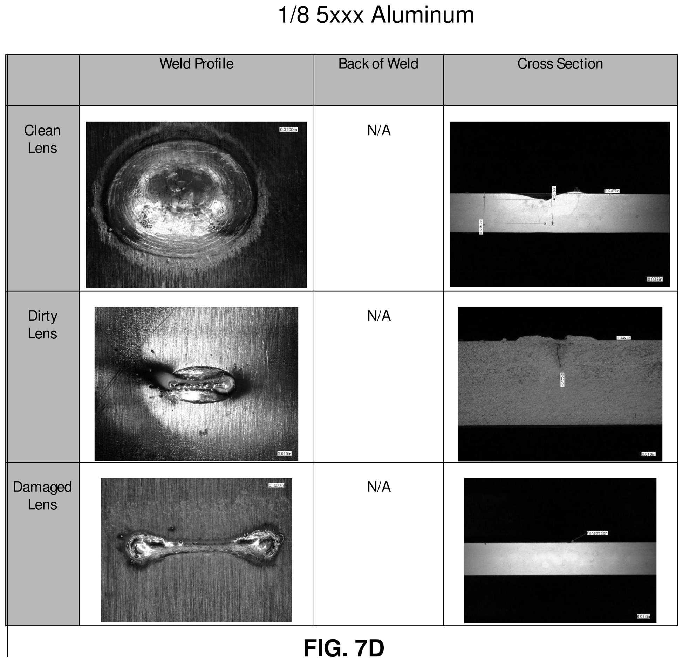

The various welds can be compared using one or more sensors or cameras, as disclosed herein. The sensors/cameras can image the welds, provide data to the controller, and analyze the characteristics as disclosed herein. The controller can provide an alert and/or status for the weld, along with instructions for cleaning and/or replacing the lens. Similar images are provided with respect to FIGS. 7B (for 1/8 steel), FIG. 7C (1/8 6xxx Aluminum), and FIG. 7D (1/8 5xxx Aluminum).

An example laser welding system, in accordance with the present disclosure, comprises: a laser welding torch having a nozzle, wherein the nozzle is configured to output a laser beam from the laser welding torch; and a frame to support the laser welding torch, wherein the frame fixes a position and orientation of the nozzle and the laser welding torch with respect to a workpiece during a welding operation.

In an example embodiment, the system laser welding system further comprises a laser welding power supply to initiate the welding operation.

In an example embodiment, the welding operation comprises: activating the laser beam for a predetermined time to perform a first weld on the workpiece; determining one or more characteristics of the first weld; activating the laser beam for the predetermined time to perform a second weld on the workpiece; and determining one or more characteristics of the second weld.

In an example embodiment, the one or more characteristics of the first and second welds comprise a depth of penetration.

In an example embodiment, the one or more characteristics of the first and second welds comprise a size of the weld at the top and a heat mark at the back.

In an example embodiment, the welding operation further comprises: comparing the one or more characteristics of the first and second welds; and determining one or more conditions of a lens of the laser welding torch based on the comparison one or more characteristics.

In an example embodiment, the one or more conditions of the lens comprise one or more of clarity, integrity, size, thermal expansion, or refractive index.

In an example embodiment, the frame includes a first portion and a second portion, a position or orientation of the first portion being movable relative to the second portion.

In an example embodiment, the first portion is configured to contact the laser welding torch.

In an example embodiment, the second portion is configured to contact the workpiece.

In an example embodiment, the laser welding torch is a handheld laser welding torch.

An example laser welding torch, in accordance with the present disclosure, comprises: a nozzle, wherein the nozzle is configured to output a laser beam from the laser welding torch; and a frame to support the laser welding torch, wherein the frame fixes a position and orientation of the nozzle and the laser welding torch with respect to a workpiece during a welding operation.

In an example embodiment, the frame includes a first portion and a second portion, a position or orientation of the first portion being movable relative to the second portion.

In an example embodiment, the first portion is configured to contact the laser welding torch.

In an example embodiment, the second portion is configured to contact the workpiece.

In an example embodiment, the laser welding torch is a handheld laser welding torch.

As utilized herein the terms "circuits" and "circuitry" refer to physical electronic components (i.e., hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or." As an example, "x and/or y" means any element of the three-element set{(x), (y), (x, y)}. In other words, "x and/ory" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y and z." As utilized herein, the term "exemplary" means serving as a non-limiting example, instance, or illustration. As utilized herein, the terms "e.g.," and "for example" set off lists of one or more non-limiting examples, instances, or illustrations.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, systems, blocks, and/or other components of disclosed examples may be combined, divided, rearranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1 A laser welding system, comprising:
   a laser welding torch having a nozzle, wherein the nozzle is configured to output a laser beam from the laser welding torch; and
   a frame to support the laser welding torch, wherein the frame fixes a position and orientation of the nozzle and the laser welding torch with respect to a workpiece during a welding operation.
Clause 2 The system of clause 1, further comprising a laser welding power supply to initiate the welding operation.
Clause 3 The system of clause 2, wherein the welding operation comprises:
   activating the laser beam for a predetermined time to perform a first weld on the workpiece;
   determining one or more characteristics of the first weld;
   activating the laser beam for the predetermined time to perform a second weld on the workpiece; and
   determining one or more characteristics of the second weld.
Clause 4 The system of clause 3, wherein the one or more characteristics of the first and second welds comprise a depth of penetration.
Clause 5 The system of clause 3, wherein the one or more characteristics of the first and second welds comprise a size of the weld at the top and a heat mark at the back.
Clause 6 The system of clause 3, wherein the welding operation further comprises:
   comparing the one or more characteristics of the first and second welds; and determining one or more conditions of a lens of the laser welding torch based on the comparison one or more characteristics.
Clause 7 The system of clause 6, wherein the one or more conditions of the lens comprise one or more of clarity, integrity, size, thermal expansion, or refractive index.
Clause 8 The system of clause 1, wherein the frame includes a first portion and a second portion, a position or orientation of the first portion being movable relative to the second portion.
Clause 9 The system of clause 8, wherein the first portion is configured to contact the laser welding torch.
Clause 10 The system of clause 8, wherein the second portion is configured to contact the workpiece.
Clause 11 The system of clause 1, wherein the laser welding torch is a handheld laser welding torch.
Clause 12 A laser welding torch, comprising:
   a nozzle, wherein the nozzle is configured to output a laser beam from the laser welding torch; and
   a frame to support the laser welding torch, wherein the frame fixes a position and orientation of the nozzle and the laser welding torch with respect to a workpiece during a welding operation.
Clause 13 The laser welding torch of clause 12, wherein the frame includes a first portion and a second portion, a position or orientation of the first portion being movable relative to the second portion.
Clause 14 The laser welding torch of clause 13, wherein the first portion is configured to contact the laser welding torch.
Clause 15 The laser welding torch of clause 13, wherein the second portion is configured to contact the workpiece.
Clause 16 The laser welding torch of clause 12, wherein the laser welding torch is a handheld laser welding torch.

## Claims

1. A laser welding system, comprising:
a laser welding torch having a nozzle, wherein the nozzle is configured to output a laser beam from the laser welding torch; and
a frame to support the laser welding torch, wherein the frame fixes a position and orientation of the nozzle and the laser welding torch with respect to a workpiece during a welding operation.

2. The system of claim 1, further comprising a laser welding power supply to initiate the welding operation.

3. The system of claim 2, wherein the welding operation comprises:
activating the laser beam for a predetermined time to perform a first weld on the workpiece;
determining one or more characteristics of the first weld;
activating the laser beam for the predetermined time to perform a second weld on the workpiece; and
determining one or more characteristics of the second weld.

4. The system of claim 3, wherein the one or more characteristics of the first and second welds comprise a depth of penetration.

5. The system of claim 3, wherein the one or more characteristics of the first and second welds comprise a size of the weld at the top and a heat mark at the back.

6. The system of claim 3, wherein the welding operation further comprises:
comparing the one or more characteristics of the first and second welds; and determining one or more conditions of a lens of the laser welding torch based on the comparison one or more characteristics.

7. The system of claim 6, wherein the one or more conditions of the lens comprise one or more of clarity, integrity, size, thermal expansion, or refractive index.

8. The system of claim 1, wherein the frame includes a first portion and a second portion, a position or orientation of the first portion being movable relative to the second portion.

9. The system of claim 8, wherein the first portion is configured to contact the laser welding torch.

10. The system of claim 8, wherein the second portion is configured to contact the workpiece.

11. The system of claim 1, wherein the laser welding torch is a handheld laser welding torch.

12. A laser welding torch, comprising:
a nozzle, wherein the nozzle is configured to output a laser beam from the laser welding torch; and
a frame to support the laser welding torch, wherein the frame fixes a position and orientation of the nozzle and the laser welding torch with respect to a workpiece during a welding operation.

13. The laser welding torch of claim 12, wherein the frame includes a first portion and a second portion, a position or orientation of the first portion being movable relative to the second portion.

14. The laser welding torch of claim 13, wherein the first portion is configured to contact the laser welding torch, or wherein the second portion is configured to contact the workpiece.

15. The laser welding torch of claim 12, wherein the laser welding torch is a handheld laser welding torch.
